# EUROPEAN PATENT APPLICATION

(11) **EP 4 808 218 A2**
(43) Date of publication of application: **16.09.2026**
(21) Application number: 26195264.2
(22) Date of filing: 22.04.2022
(51) Int. Cl.: H04W 52/00

(54) **BANDWIDTH PART SWITCHING**

(30) Priority: 26.05.2021 IN 202141023407
(62) Document number(s) of the earlier application(s) in accordance with Art. 76 EPC: 22725965.2 / 4 348 901
(71) Applicant: QUALCOMM Incorporated, San Diego, CA 92121-1714 (US)
(72) Inventor: VYAS, Anuj, San Diego, CA 92121-1714 (US); GUPTA, Ashutosh, San Diego, CA 92121-1714 (US); PATEL, Harinath Reddy, San Diego, CA 92121-1714 (US); PANWAR, Neeraj, San Diego, CA 92121-1714 (US); GUPTA, Pankaj Shivcharan, San Diego, CA 92121-1714 (US)
(74) Representative: Bardehle Pagenberg Partnerschaft mbB Patentanwälte Rechtsanwälte

(57) **Abstract**

Methods, systems, and devices for wireless communications are described. In some systems, a base station may configure a user equipment (UE) with a first-active bandwidth part (BWP). The first-active BWP may correspond to a subset of a channel bandwidth. Retuning one or more components (e.g., radio frequency (RF) components) to the first-active BWP at the UE may involve a relatively significant delay. To avoid missing communications while tuning to the first-active BWP, the UE may initially tune to the channel bandwidth. The UE may identify a next-available time resource for retuning to the first-active BWP, where the next-available time resource may be a portion of an off-duration of a discontinuous reception (DRX) cycle or a portion of a measurement gap. The UE may use the time resource to retune to the first-active BWP while the UE is configured to reduce communications with a serving base station.

## Description

### CROSS REFERENCES

The present Application for Patent claims priority to Indian Patent Application No. 202141023407 by VYAS et al., entitled "BANDWIDTH PART SWITCHING," filed May 26, 2021; assigned to the assignee hereof and expressly incorporated by reference herein.

### FIELD OF TECHNOLOGY

The following relates to wireless communications, including bandwidth part switching.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In some wireless communications systems, a UE may operate using a specific bandwidth part (BWP) in the frequency domain. A base station may configure the UE with the BWP to use based on one or more conditions. However, switching from one BWP to another may involve a number of processes at the UE, including tuning one or more radio frequency (RF) components to the new BWP. Tuning an RF component to a specific BWP may take time, during which the UE may fail to support communications with other devices.

### SUMMARY

The described techniques relate to improved methods, systems, devices, and apparatuses that support bandwidth part (BWP) switching. Generally, the described techniques provide for a user equipment (UE) to switch to a configured first-active BWP without missing communications and prior to receiving a downlink control information (DCI) message specifically triggering the BWP switch. The described techniques provide for power savings at the UE without missing grants from a base station during the BWP switch. For example, a base station may configure a UE with a first-active BWP (e.g., using a control message, such as a radio resource control (RRC) reconfiguration message). The first-active BWP may correspond to a subset of a channel bandwidth. Retuning one or more components (e.g., radio frequency (RF) components) to the first-active BWP at the UE may involve a relatively significant delay, such that the UE may fail to complete the retuning process ahead of a resource for providing acknowledgment of the control message to the base station. To avoid missing communications while tuning to the first-active BWP, the UE may instead initially tune to the full channel bandwidth associated with the first-active BWP. The UE may identify a next-available time resource for retuning to the bandwidth of the first-active BWP. In some cases, the next-available time resource may be a portion of an off-duration of a discontinuous reception (DRX) cycle or a portion of a measurement gap. For example, during an off-duration of the DRX cycle and during a measurement gap, the UE may refrain from communicating with a serving base station, so the UE may perform the retuning in such resources without missing communications between the serving base station and the UE. The UE may use the identified next-available time resource to retune to the first-active BWP. By retuning an RF component from the channel bandwidth to the first-active BWP (e.g., narrowing the operating BWP), the UE may reduce the processing overhead at the UE.

A method for wireless communication at a UE is described. The method may include receiving a control message to modify an RRC configuration between the UE and a base station, the control message indicating a first-active BWP associated with a channel, and tuning an RF component of the UE to communicate over a first bandwidth of the channel based on receiving the control message. The method may further include retuning, during a portion of time resources that the UE is configured to reduce communications with the base station, the RF component of the UE from the first bandwidth to a second bandwidth of the first-active BWP and communicating with the base station using the second bandwidth of the first-active BWP based on retuning the RF component of the UE.

An apparatus for wireless communication at a UE is described. The apparatus may include a processor, memory coupled with the processor, and instructions stored in the memory. The instructions may be executable by the processor to cause the apparatus to receive a control message to modify an RRC configuration between the UE and a base station, the control message indicating a first-active BWP associated with a channel, and tune an RF component of the UE to communicate over a first bandwidth of the channel based on receiving the control message. The instructions may be further executable by the processor to cause the apparatus to retune, during a portion of time resources that the UE is configured to reduce communications with the base station, the RF component of the UE from the first bandwidth to a second bandwidth of the first-active BWP and communicate with the base station using the second bandwidth of the first-active BWP based on retuning the RF component of the UE.

Another apparatus for wireless communication at a UE is described. The apparatus may include means for receiving a control message to modify an RRC configuration between the UE and a base station, the control message indicating a first-active BWP associated with a channel, and means for tuning an RF component of the UE to communicate over a first bandwidth of the channel based on receiving the control message. The apparatus may further include means for retuning, during a portion of time resources that the UE is configured to reduce communications with the base station, the RF component of the UE from the first bandwidth to a second bandwidth of the first-active BWP and means for communicating with the base station using the second bandwidth of the first-active BWP based on retuning the RF component of the UE.

A non-transitory computer-readable medium storing code for wireless communication at a UE is described. The code may include instructions executable by a processor to receive a control message to modify an RRC configuration between the UE and a base station, the control message indicating a first-active BWP associated with a channel, and tune an RF component of the UE to communicate over a first bandwidth of the channel based on receiving the control message. The code may further include instructions executable by the processor to retune, during a portion of time resources that the UE is configured to reduce communications with the base station, the RF component of the UE from the first bandwidth to a second bandwidth of the first-active BWP and communicate with the base station using the second bandwidth of the first-active BWP based on retuning the RF component of the UE.

Some examples of the method, apparatuses, and non-transitory computer-readable medium described herein may further include operations, features, means, or instructions for receiving, in the control message, information about a configuration of a DRX cycle, where retuning the RF component may be based on receiving the information about the configuration of the DRX cycle.

In some examples of the method, apparatuses, and non-transitory computer-readable medium described herein, the portion of the time resources includes a first portion of an off-duration of a DRX cycle.

Some examples of the method, apparatuses, and non-transitory computer-readable medium described herein may further include operations, features, means, or instructions for entering, by the UE, a sleep mode during a first portion of an off-duration of a DRX cycle after retuning the RF component during a second portion of the off-duration of the DRX cycle.

In some examples of the method, apparatuses, and non-transitory computer-readable medium described herein, the portion of the time resources includes a first portion of a measurement gap in which the UE may be configured to measure one or more channel conditions.

Some examples of the method, apparatuses, and non-transitory computer-readable medium described herein may further include operations, features, means, or instructions for receiving, in the control message, information about a configuration of a measurement gap, where retuning the RF component may be based on receiving the information about the configuration of the measurement gap.

In some examples of the method, apparatuses, and non-transitory computer-readable medium described herein, the information about the configuration of the measurement gap includes a gap offset, a measurement gap length, a measurement gap repetition period, or a measurement gap timing advance (TA), or a combination thereof.

Some examples of the method, apparatuses, and non-transitory computer-readable medium described herein may further include operations, features, means, or instructions for measuring, during a first portion of a measurement gap, one or more channel conditions using one or more reference signals after retuning the RF component during a second portion of the measurement gap.

Some examples of the method, apparatuses, and non-transitory computer-readable medium described herein may further include operations, features, means, or instructions for suspending, by the UE, communications with the base station during a measurement gap based on tuning the RF component to the first bandwidth after receiving the control message, where retuning the RF component may be based on suspending the communications with the base station during the measurement gap.

Some examples of the method, apparatuses, and non-transitory computer-readable medium described herein may further include operations, features, means, or instructions for identifying the portion of the time resources available for the UE to perform the retuning that occurs after tuning the RF component to the first bandwidth of the channel, where retuning the RF component of the UE may be based on identifying the portion.

In some examples of the method, apparatuses, and non-transitory computer-readable medium described herein, the portion includes a next-available time resource after tuning the RF component of the UE to communicate over the first bandwidth of the channel.

In some examples of the method, apparatuses, and non-transitory computer-readable medium described herein, the portion includes a next-available measurement gap or a next-available off-duration of a DRX cycle after tuning the RF component of the UE to communicate over the first bandwidth of the channel.

Some examples of the method, apparatuses, and non-transitory computer-readable medium described herein may further include operations, features, means, or instructions for identifying a first start time of a next occurrence of a measurement gap, identifying a second start time of a next occurrence of an off-duration of a DRX cycle, and selecting the next occurrence of the measurement gap or the next occurrence of the off-duration of the DRX cycle as the portion of the time resources for retuning the RF component, where retuning the RF component may be based on the selecting.

Some examples of the method, apparatuses, and non-transitory computer-readable medium described herein may further include operations, features, means, or instructions for receiving DCI that requests the UE to switch from the first-active BWP to a second BWP having a third bandwidth based on retuning the RF component of the UE. Some such examples of the method, apparatuses, and non-transitory computer-readable medium described herein may further include operations, features, means, or instructions for retuning the RF component of the UE from the second bandwidth of the first-active BWP to the third bandwidth of the second BWP based on receiving the DCI.

In some examples of the method, apparatuses, and non-transitory computer-readable medium described herein, retuning the RF component of the UE occurs after receiving the control message and before receiving DCI that requests the UE to switch from the first-active BWP to a second BWP having a third bandwidth.

Some examples of the method, apparatuses, and non-transitory computer-readable medium described herein may further include operations, features, means, or instructions for identifying that the first-active BWP has been inactive for a duration that satisfies a threshold associated with an inactivity timer based on retuning the RF component of the UE. Some such examples of the method, apparatuses, and non-transitory computer-readable medium described herein may further include operations, features, means, or instructions for retuning the RF component of the UE from the second bandwidth of the first-active BWP to a default BWP having a third bandwidth based on identifying that the first-active BWP has been inactive for the duration that satisfies the threshold associated with the inactivity timer.

In some examples of the method, apparatuses, and non-transitory computer-readable medium described herein, retuning the RF component of the UE occurs after receiving the control message and before identifying that the first-active BWP has been inactive for a duration that satisfies a threshold associated with an inactivity timer.

In some examples of the method, apparatuses, and non-transitory computer-readable medium described herein, the control message includes an RRC reconfiguration message, and the RRC reconfiguration message includes an information element (IE) indicating the first-active BWP associated with the RRC configuration between the UE and the base station.

In some examples of the method, apparatuses, and non-transitory computer-readable medium described herein, the RRC reconfiguration message includes a second IE indicating a default BWP associated with the RRC configuration between the UE and the base station.

In some examples of the method, apparatuses, and non-transitory computer-readable medium described herein, the RRC reconfiguration message includes a second IE indicating a duration for a timer associated with an inactivity of an active BWP for communications between the UE and the base station.

In some examples of the method, apparatuses, and non-transitory computer-readable medium described herein, the first bandwidth may be wider than and includes the second bandwidth.

### BRIEF DESCRIPTION OF THE DRAWINGS

FIGs. 1 and 2 illustrate examples of wireless communications systems that support bandwidth part (BWP) switching in accordance with aspects of the present disclosure.
FIGs. 3A and 3B illustrate examples of BWP switching schemes that support BWP switching in accordance with aspects of the present disclosure.
FIG. 4 illustrates an example of a process flow that supports BWP switching in accordance with aspects of the present disclosure.
FIGs. 5 and 6 show block diagrams of devices that support BWP switching in accordance with aspects of the present disclosure.
FIG. 7 shows a block diagram of a communications manager that supports BWP switching in accordance with aspects of the present disclosure.
FIG. 8 shows a diagram of a system including a device that supports BWP switching in accordance with aspects of the present disclosure.
FIGs. 9 through 12 show flowcharts illustrating methods that support BWP switching in accordance with aspects of the present disclosure.

### DETAILED DESCRIPTION

In some wireless communications systems, a user equipment (UE) may operate using a specific bandwidth part (BWP) in the frequency domain. A base station may configure the UE with a first-active BWP, for example, using a control message. However, switching from one BWP to another may involve a number of processes at the UE, including tuning one or more radio frequency (RF) components to the new BWP. Tuning an RF component to the first-active BWP may involve significant latency, during which the UE may fail to support communications with other devices. As such, a UE performing a BWP switch may miss one or more communications between a base station and the UE, reducing communication reliability for the wireless communications system. In some systems, to avoid missing communications, the UE may initially tune to a full channel bandwidth associated with the first-active BWP and delay performing an RF retune to the actual BWP size until a downlink control information (DCI) message is received or a BWP inactivity timer expires. However, delaying the RF retune until the next DCI-based BWP switch or BWP inactivity timer expiry may be inefficient for the UE, as the UE may operate with a significantly higher power overhead while tuned to the full channel bandwidth as compared to being tuned to the first-active BWP.

To efficiently switch to a configured first-active BWP without missing communications, a UE may perform one or more BWP switching techniques as described herein. For example, the UE may identify a next-available time resource during which the UE is scheduled to refrain from communicating with a serving base station and may perform the retuning to the first-active BWP during the identified time resource. Such a time resource may be a portion of an off-duration of a discontinuous reception (DRX) cycle or a portion of a measurement gap. For example, during an off-duration of the DRX cycle, the UE may be configured to enter a sleep mode (e.g., a relatively low power mode), during which the UE may not communicate with the base station. Similarly, during a measurement gap, the UE may be configured to perform channel measurements for nearby base stations and may refrain from communicating with the serving base station. As such, the UE may perform the retuning in such resources without missing communications between the serving base station and the UE. Because the UE may retune RF components and switch to the first-active BWP during the next-available off-duration or measurement gap-as opposed to waiting for a DCI-based BWP switch-the UE may reduce the time duration at which the UE is tuned to the full channel bandwidth (e.g., as compared to the relatively narrower first-active BWP), effectively reducing the power overhead at the UE.

The UE may receive, from a base station, a control message-such as a radio resource control (RRC) reconfiguration message-indicating a first-active BWP for the UE. The first-active BWP may span a contiguous set of physical resource blocks (RBs) corresponding to a subset of a channel bandwidth. The UE may initially tune at least an RF component of the UE to a first bandwidth of the channel (e.g., the channel bandwidth) that is associated with the first-active BWP in response to receiving the control message. In some cases, the UE may transmit, to the base station, an acknowledgment message confirming successful receipt of the control message based on tuning to the channel bandwidth. The UE may retune the RF component during a portion of time resources in which the UE is configured to reduce communications with the base station. For example, the UE may identify an off-duration of a DRX cycle or a measurement gap during which the UE may suspend communications with the base station. The UE may retune the RF component of the UE from the first bandwidth (e.g., the channel bandwidth) to a second bandwidth of the first-active BWP during the portion of the time resources (e.g., the off-duration of the DRX cycle or the measurement gap). The UE may communicate with the base station using the second bandwidth of the first-active BWP based on retuning the RF component of the UE.

Aspects of the disclosure are initially described in the context of wireless communications systems. Additional aspects of the disclosure are described with reference to BWP switching schemes and process flows. Aspects of the disclosure are further illustrated by and described with reference to apparatus diagrams, system diagrams, and flowcharts that relate to BWP switching.

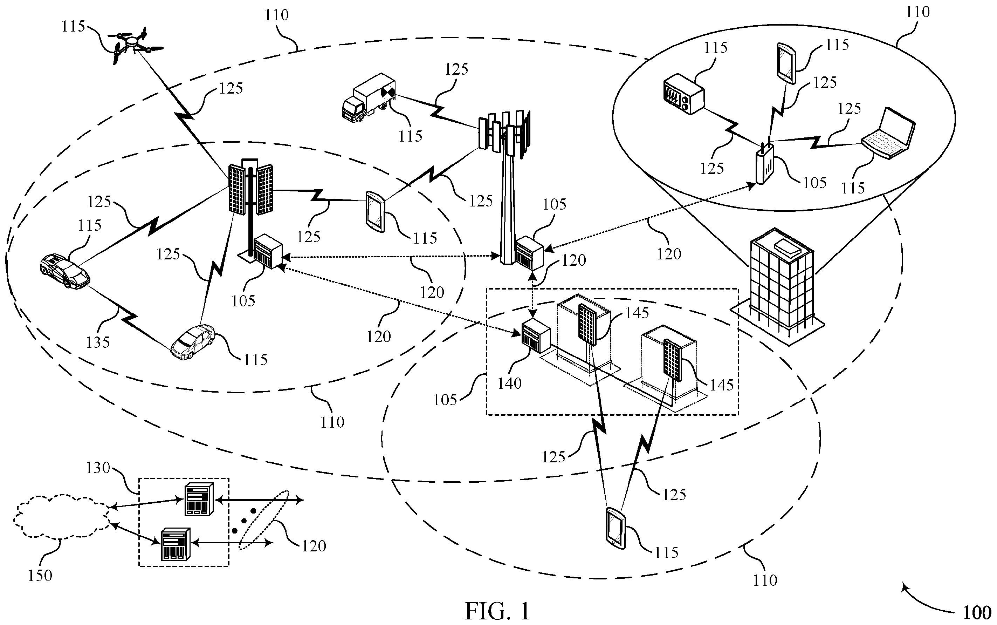

**FIG. 1** illustrates an example of a wireless communications system 100 that supports BWP switching in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a BWP) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ* = 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or RBs) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the RRC protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

The wireless communications system 100 may support BWP switching. For example, a base station 105 may configure a UE 115 with an active BWP (e.g., a first-active BWP associated with a channel). To switch to a configured active BWP, the UE 115 may perform one or more tuning operations to support communicating over the configured BWP. However, during the tuning operations, the UE 115 may fail to support communications with the base station 105. To mitigate missing communications during BWP switching, the UE 115 may identify a portion of time resources to use for switching BWPs in which the UE 115 may be configured to refrain from communicating with the base station 105. For example, a UE 115 using power saving techniques, such as operating according to a DRX mode, may perform the tuning and switch to the first-active BWP during an off-duration of a DRX cycle. Additionally or alternatively, the UE 115 may perform the tuning and switch to the first-active BWP during a measurement gap scheduled for the UE 115 to measure channel conditions for one or more neighboring cells. By tuning one or more components of the UE 115 to the first-active BWP during time resources in which the UE 115 is configured to refrain from communicating with the base station 105, the UE 115 may avoid missing communications during the tuning process. Additionally, the UE 115 may complete the tuning process prior to receiving a DCI message from the base station 105 explicitly scheduling the tuning or BWP switching, which may improve power savings at the UE 115. For example, the UE 115 may achieve power savings based on operating on the first-active BWP (e.g., as opposed to using a channel-or carrier-bandwidth, which may involve a relatively higher processing overhead than using the first-active BWP).

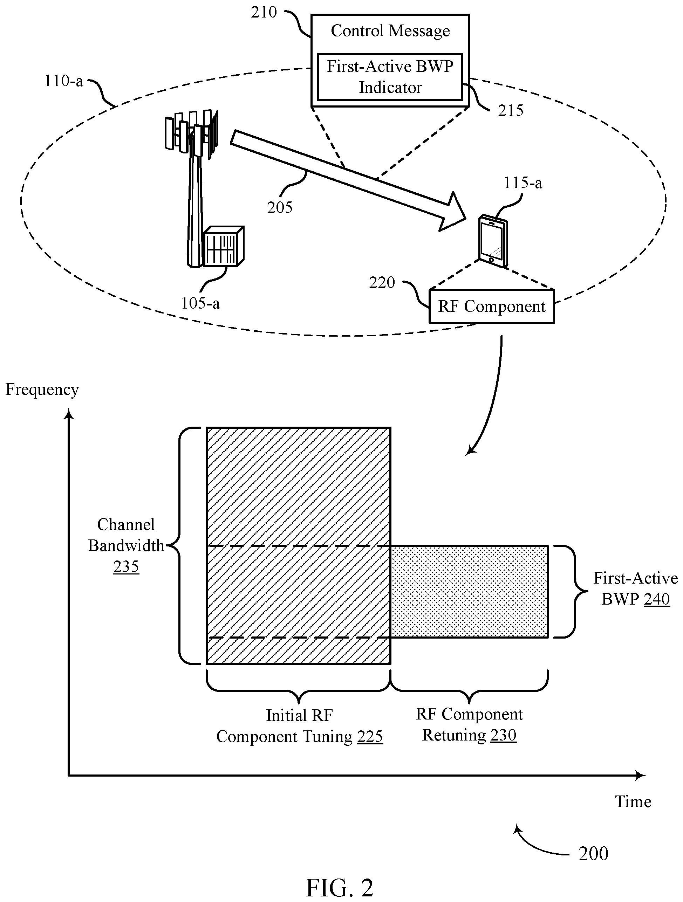

**FIG. 2** illustrates an example of a wireless communications system 200 that supports BWP switching in accordance with aspects of the present disclosure. The wireless communications system 200 may be an example of a wireless communications system 100. For example, the wireless communications system 200 may include a base station 105-a and a UE 115-a, which may be examples of the corresponding devices described with reference to FIG. 1. The base station 105-a may provide service for a coverage area 110-a, which may be an example of a coverage area 110 described with reference to FIG. 1. The base station 105-a may configure the UE 115-a with a first-active BWP 240 using a control message 210 transmitted over a downlink channel 205. The UE 115-a may schedule tuning an RF component 220 to the first-active BWP 240 to reduce the latency involved in completing the tuning process, while avoiding missing communications with the base station 105-a.

In some wireless communications systems 200 (e.g., NR systems or other systems), UEs 115 may operate on BWPs. A BWP may span a contiguous set of physical RBs. In some examples, a BWP may span a full bandwidth of a carrier (e.g., a channel bandwidth). In some other examples, a BWP may span a subset of RBs of the carrier, such that the BWP corresponds to a relatively narrow band. In some modes of operation (e.g., sub-6 GHz mode), the network may configure a UE 115 with a specific number of BWPs, and the UE 115 may use one active BWP at a time. For example, the base station 105-a may configure the UE 115-a with up to a threshold number of BWPs (e.g., up to four BWP configurations), and, at any given time, the UE 115-a may communicate using one active BWP of the configured BWPs.

The network may coordinate BWP selection with the UE 115-a. For example, to support reliable communications between the UE 115-a and the base station 105-a, the network and the UE 115-a may coordinate which BWP is active. The network, the UE 115-a, or a combination thereof may base BWP selection on data demand (e.g., current data usage) or one or more other parameters. For example, the network may select a first BWP for the UE 115-a spanning a relatively greater quantity of RBs if the current data usage for the UE 115-a is relatively high (e.g., above a data usage threshold or an expected data usage threshold) and may select a second BWP for the UE 115-a spanning a relatively lesser quantity of RBs if the current data usage for the UE 115-a is relatively low (e.g., below a data usage threshold or an expected data usage threshold). Data usage may include information received by the UE 115-a from the base station 105-a and information transmitted by the UE 115-a to the base station 105-a. By switching to a narrower BWP (e.g., a BWP spanning a relatively lesser quantity of RBs), the UE 115-a may achieve significant power savings. For example, the UE 115-a may monitor fewer frequency resources, among other processing gains.

In some examples, the UE 115-a may trigger a BWP switch. For example, the UE 115-a may trigger a BWP switch based on expiry of an inactivity timer. If the UE 115-a identifies that the currently active BWP has been inactive for a duration satisfying a threshold duration defined by a BWP inactivity timer, the UE 115-a may fall back to a default BWP. In some cases, the default BWP may be an example of a relatively low bandwidth BWP (e.g., narrower than a threshold bandwidth for improved power savings).

Additionally or alternatively, the base station 105-a may indicate a BWP to the UE 115-a for the UE 115-a to perform a BWP switch. The UE 115-a may store information defining multiple configured BWPs and may operate according to a currently active BWP. The base station 105-a may transmit, to the UE 115-a, a control message 210 indicating a BWP switch. In some cases, the base station 105-a may transmit an RRC message requesting the UE 115-a to switch from the currently active BWP to a different BWP. In some other cases, the base station 105-a may transmit a DCI message requesting the UE 115-a to switch from the currently active BWP to a different BWP. In some cases, rather than triggering the BWP switch, the control message 210 may indicate the BWP to which the UE 115-a is to switch, and the UE 115-a may perform the BWP switch at a later time based on the control message 210.

The control message 210 may include a first-active BWP indicator 215. The first-active BWP indicator 215 may correspond to a first-active BWP 240 (e.g., one of the BWPs configured at the UE 115-a) for the UE 115-a. For example, the control message 210 may be an example of an RRC reconfiguration message, and the first-active BWP indicator 215 may be an example of an information element (IE) corresponding to the *FirstActiveBWP*. If the RRC reconfiguration message is the first RRC reconfiguration message received by the UE 115-a upon connecting to the base station 105-a, the UE 115-a may directly camp on the indicated first-active BWP 240. If the UE 115-a has previously camped on a different BWP and receives the RRC reconfiguration message, the UE 115-a may switch from the current BWP to the indicated first-active BWP 240.

To switch from one BWP to another, the UE 115-a may tune one or more components to the target BWP. For example, the UE 115-a may tune an RF component 220 from the previous BWP to the target BWP. Tuning the RF component 220 may involve the UE 115-a building one or more RF scripts which support a transceiver at the UE 115-a using the specific BWP. Building the RF scripts may involve a non-trivial resource consumption and latency overhead, such that building RF scripts for multiple BWPs may involve a delay at the UE 115-a. If the UE 115-a receives a control message 210 (e.g., an RRC reconfiguration message) configuring the UE 115-a with one or more BWPs, each configured BWP may involve building a respective RF script at the UE 115-a. However, the UE 115-a may also be configured to transmit an acknowledgment message back to the base station 105-a in response to the control message 210. The turnaround time for transmitting the acknowledgment message after receiving the control message 210 may fail to support the full tuning process (e.g., including building RF scripts for each configured BWP). To meet the turnaround time, the UE 115-a may first build the RF script and tune the RF component 220 to the full channel bandwidth 235 BWP (e.g., the full bandwidth of the cell) during the reconfiguration process triggered by the control message 210, and the UE 115-a may transmit the acknowledgment message based on tuning to the full channel bandwidth 235. Accordingly, after receiving the control message 210 including the first-active BWP indicator 215, the UE 115-a may first operate according to an initial RF component tuning 225 to the full channel bandwidth 235. If the UE 115-a instead tuned to the indicated first-active BWP 240 (e.g., a narrower bandwidth than the full channel bandwidth 235) during the reconfiguration process, the tuning process may be delayed, causing the UE 115-a and the network to go out of sync and potentially resulting in missed communications between the UE 115-a and the base station 105-a.

Some other systems may trigger the actual switch to an indicated first-active BWP using a DCI message. For example, a base station may transmit a DCI message indicating a BWP switch event to a UE, and the UE may switch from the full channel bandwidth to the first-active BWP. However, the network controls the scheduling of the DCI-based BWP switch event. Because the network may not be aware that the UE is currently tuned to the full channel bandwidth, rather than the indicated first-active BWP, the network may fail to schedule a DCI-based BWP switch event in a relatively prompt manner. Accordingly, the UE may waste a significant amount of power camping on the channel bandwidth-as opposed to the more efficient first-active BWP-before receiving the DCI-based BWP switch and triggering the retuning to the first-active BWP.

In contrast, the wireless communications system 200 may support efficient BWP switching techniques using a portion of time resources in which the UE 115-a is configured to reduce communications with the base station 105-a. For example, the UE 115-a may identify a next-available time resource (e.g., after performing the reconfiguration in response to the control message 210) in which the UE 115-a may not communicate with the base station 105-a. Such a time resource may be a portion of an off-duration in a DRX cycle, a portion of a measurement gap, or another time resource during which the UE 115-a is scheduled to suspend communications with the base station 105-a. The UE 115-a may retune, during the identified time resource, the RF component 220 from the channel bandwidth 235 to the first-active BWP 240 indicated by the previously received control message 210. Because the base station 105-a is configured to refrain from scheduling communications (e.g., uplink or downlink messages) with the UE 115-a during such a time resource, the UE 115-a may perform the RF retuning without missing communications with the base station 105-a. Additionally, by using the next-available time resource instead of waiting for a DCI-based BWP switch event, the UE 115-a may perform the RF retuning according to a relatively faster timeline, increasing the time spent camping on the first-active BWP 240 and, correspondingly, increasing the power savings at the UE 115-a. Based on performing the BWP switch in the next-available time resource in which the UE 115-a is configured to reduce communications with the base station 105-a, the UE 115-a may communicate with the base station 105-a according to the RF component retuning 230 to the first-active BWP 240.

In a specific example, the UE 115-a may support two UE-specific BWPs. The network (e.g., via the base station 105-a) may configure the UE 115-a with a first UE-specific BWP of 100 MHz and a second UE-specific BWP of 20 MHz. The second BWP may also act as the default BWP for the UE 115-a. The base station 105-a may transmit the control message 210 (e.g., an RRC reconfiguration message) indicating the second BWP as the first-active BWP 240, and in some cases may switch the UE 115-a to the first BWP based on data usage. If the UE 115-a receives the control message 210 indicating the second BWP as the first-active BWP 240, the UE 115-a may initially tune to the relatively wider BWP (e.g., the first BWP of 100 MHz, corresponding to a channel bandwidth 235) during the reconfiguration. Because the first BWP includes the RBs for the second BWP, the UE 115-a may communicate on the indicated first-active BWP 240, even though the UE 115-a is tuned to the wider channel bandwidth 235. Building the RF scripts for both the first BWP and the second BWP may take approximately 20 milliseconds (ms), but the response to the control message 210 may be scheduled for 16 ms after receipt of the control message 210. Accordingly, the UE 115-a may initially tune the RF component 220 (e.g., a set of one or more components, including at least the RF component 220) to the first BWP corresponding to the channel bandwidth 235 in order to transmit the acknowledgment message for the control message 210 in the scheduled resource. The UE 115-a may retune the RF component 220 to the second BWP corresponding to the first-active BWP 240 during a next-available time resource of a threshold duration (e.g., a duration that supports performing the retuning, such as approximately 3 ms) in which the UE 115-a is configured to reduce communications with the base station 105-a.

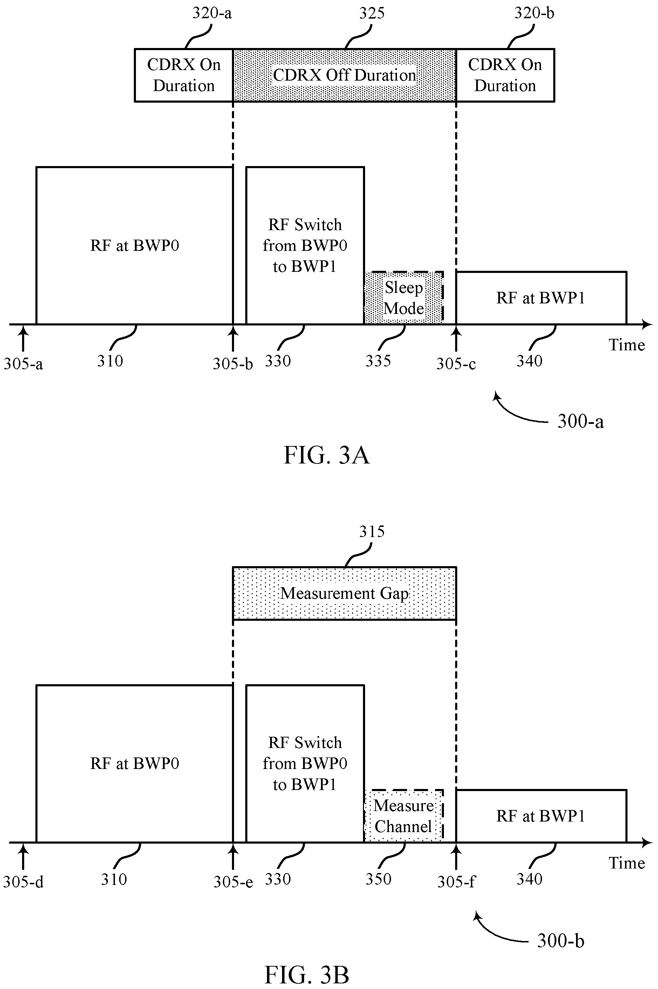

**FIGs. 3A and 3B** illustrate examples of BWP switching schemes 300 that support BWP switching in accordance with aspects of the present disclosure. **FIG. 3A** illustrates an example of a BWP switching scheme 300-a during an off-duration of a DRX cycle. The BWP switching scheme 300-a may be performed by a UE 115 in a wireless communications system 100 or 200, as described with reference to FIGs. 1 and 2. The UE 115 may operate in a connected DRX (CDRX) mode, in which the UE 115 switches between CDRX on-durations 320 and CDRX off-durations 325. During a CDRX on-duration 320, the UE 115 may operate at a relatively high-power mode (e.g., an "awake" mode) and may communicate with a base station 105. During a CDRX off-duration 325, the UE 115 may operate at a relatively low-power mode (e.g., a "sleep" mode) and may not communication with the base station 105. The base station 105 may configure and track the DRX cycle of the UE 115, such that the base station 105 may schedule communications with the UE 115 for the CDRX on-durations 320 and may refrain from communicating with the UE 115 during the CDRX off-durations 325. The UE 115 may efficiently utilize a CDRX off-duration 325 to perform a pending RF retuning and BWP switch without missing communications (e.g., grants, data) from the base station 105.

At 305-a, the UE 115 may receive a control message (e.g., an RRC reconfiguration message) from the base station 105. The control message may reconfigure the UE 115 with a different BWP configuration, including an indication of a first-active BWP, BWP1. The UE 115 may initially tune one or more RF components of the UE 115 to the channel bandwidth (e.g., a bandwidth wider than and including the bandwidth of the first-active BWP), BWP0, as described with reference to FIG. 2. At 310, the UE 115 may operate during a CDRX on-duration 320-a with the one or more RF components tuned to BWP0 (e.g., the channel bandwidth).

At 305-b, the UE 115 may enter a CDRX off-duration 325. In some examples, the CDRX off-duration 325 may correspond to the next-available time resource after the reconfiguration process in which the UE 115 is configured to reduce communications with the base station 105. As such, the UE 115 may perform the pending retuning of the one or more RF components during the CDRX off-duration 325. For example, at 330, the UE 115 may retune the one or more RF components of the UE 115 from BWP0 to BWP1 (e.g., the first-active BWP). The UE 115 may perform the BWP switch from operating using the full channel bandwidth to using the bandwidth corresponding to the first-active BWP based on completing the RF retuning. In some cases, the retuning process may take a first portion of the CDRX off-duration 325. In some such cases, the UE 115 may enter a sleep mode at 335 for a second portion of the CDRX off-duration 325 to achieve additional power savings.

At 305-c, the UE 115 may enter a CDRX on-duration 320-b. For example, the UE 115 may wake up from the sleep mode to communicate with the base station 105 (e.g., monitor for transmissions, perform scheduled communications). At 340, the UE 115 may operate using the BWP1 based on retuning the one or more RF components of the UE 115 to BWP1 during the CDRX off-duration 325. Accordingly, the UE 115 may camp on BWP1 (e.g., the relatively narrower bandwidth corresponding to the indicated first-active BWP) prior to a network-controlled DCI-based BWP switch event and prior to the expiry of an inactivity timer, reducing processing overhead and improving power savings at the UE 115.

**FIG. 3B** illustrates an example of a BWP switching scheme 300-b during a measurement gap. The BWP switching scheme 300-b may be performed by a UE 115 in a wireless communications system 100 or 200, as described with reference to FIGs. 1 and 2. A serving base station 105 may configure the UE 115 with a measurement gap 315 in which to perform channel measurements for neighboring cells. During the measurement gap 315, the UE 115 may monitor for reference signals from neighboring cells, and the serving base station 105 may refrain from communicating with the UE 115. The UE 115 may efficiently utilize a measurement gap 315 to perform a pending RF retuning and BWP switch without missing communications (e.g., grants, data) from the base station 105.

At 305-d, the UE 115 may receive a control message from the base station 105. The control message may reconfigure the UE 115 with a different BWP configuration, including an indication of a first-active BWP, BWP1. The UE 115 may initially tune one or more RF components of the UE 115 to the channel bandwidth, BWP0, as described with reference to FIG. 2. At 310, the UE 115 may operate with the one or more RF components tuned to BWP0 (e.g., the channel bandwidth).

The UE 115 may be scheduled (e.g., by the network) with a measurement gap 315 starting at 305-e. In some examples, the measurement gap 315 may correspond to the next-available time resource after the reconfiguration process in which the UE 115 is configured to reduce communications with the base station 105. As such, the UE 115 may perform the pending retuning of the one or more RF components during the measurement gap 315 (e.g., if the measurement gap 315 satisfies a threshold length, such as 6 ms). For example, at 330, the UE 115 may retune the one or more RF components of the UE 115 from BWP0 to BWP1 (e.g., the first-active BWP). The UE 115 may perform the BWP switch from operating using the full channel bandwidth to using the bandwidth corresponding to the first-active BWP based on completing the RF retuning. In some cases, the retuning process may take a first portion of the measurement gap 315. In some such cases, the UE 115 may measure one or more channel conditions (e.g., using one or more reference signals received from one or more base stations 105) at 350 during a second portion of the measurement gap 315.

At 305-f, the scheduled measurement gap 315 may end and the UE 115 may perform communications with the base station 105. At 340, the UE 115 may operate using the BWP1 based on retuning the one or more RF components of the UE 115 to BWP1 during the measurement gap 315.

In some examples, a UE 115 may operate according to a combination of the BWP switching scheme 300-a and the BWP switching scheme 300-b. For example, the UE 115 may identify a first start time of a next occurrence of a measurement gap 315 and a second start time of a next occurrence of a CDRX off-duration 325 and may select either the next occurrence of the measurement gap 315 or the next occurrence of the CDRX off-duration 325 to perform the pending retuning of the one or more RF components based on which occurs earlier.

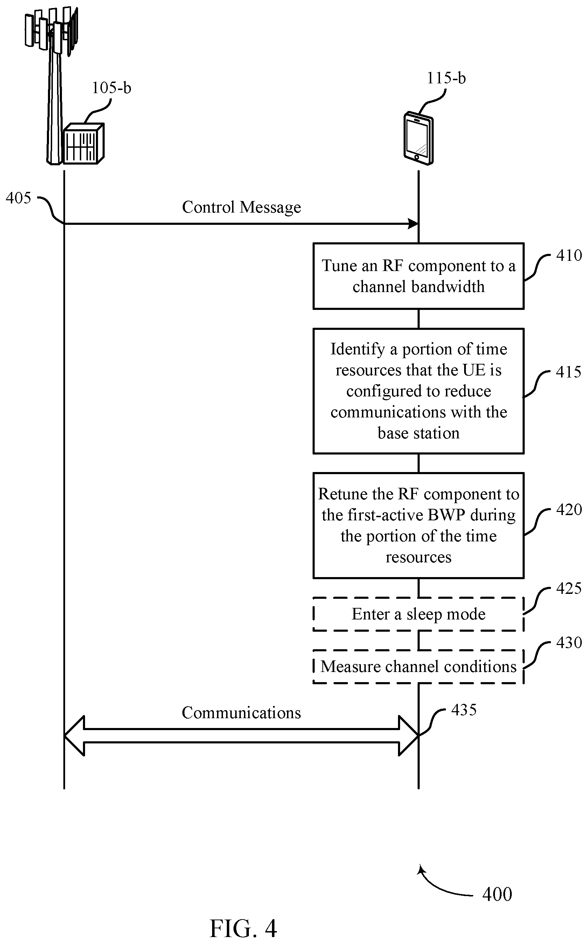

**FIG. 4** illustrates an example of a process flow 400 that supports BWP switching in accordance with aspects of the present disclosure. In some examples, the process flow 400 may implement aspects of a wireless communications system 100 or 200, as described with reference to FIGs. 1 and 2. The process flow 400 may be performed by a UE 115-b and a base station 105-b, which may be examples of a UE 115 and a base station 105 as described with reference to FIGs. 1 through 3B. The UE 115-b may efficiently perform RF retuning and BWP switching during an off-duration of a DRX cycle or during a measurement gap to avoid missing communications with the base station 105-b and improve power savings at the UE 115-b. Alternative examples of the following may be implemented, where some processes are performed in a different order than described or are not performed at all. In some cases, processes may include additional features not mentioned below, or further processes may be added.

At 405, the base station 105-b may reconfigure an RRC configuration between the UE 115-b and the base station 105-b. For example, the base station 105-b may transmit a control message to the UE 115-b indicating a first-active BWP associated with a channel. The control message may be an example of an RRC reconfiguration message, and the RRC reconfiguration message may include an IE indicating the first-active BWP associated with the RRC configuration between the UE 115-b and the base station 105-b. In some examples, the RRC reconfiguration message may further include a second IE indicating a default BWP associated with the RRC configuration between the UE 115-b and the base station 105-b, a third IE indicating a duration for a timer associated with an inactivity of an active BWP for communications between the UE 115-b and the base station 105-b, or both. The UE 115-b may receive the control message and identify a pending BWP switch to the first-active BWP based on the contents of the control message.

At 410, the UE 115-b may tune an RF component of the UE 115-b to communicate over a first bandwidth of the channel based on receiving the control message. For example, the first bandwidth may be an example of a channel bandwidth. The channel bandwidth may be wider than and include a second bandwidth of the first-active BWP. In some examples, the UE 115-b may perform the initial tuning of the RF component (e.g., a set of one or more components including at least the RF component) to the channel bandwidth based on a processing time for RF tuning to the first-active BWP exceeding a threshold time for responding to the control message. Instead, the UE 115-b may respond to the control message (e.g., with an acknowledgment message) using the RF component tuned to the channel bandwidth.

At 415, the UE 115-b may identify a portion of time resources available for the UE to perform retuning of the RF component from the first bandwidth (e.g., the channel bandwidth) to the second bandwidth of the first-active BWP. The UE 115-b may be configured to reduce communications (e.g., refrain from communicating) with the base station 105-b during the time resources. The portion of the time resources may occur after tuning the RF component to the first bandwidth of the channel. In some examples, the portion includes a next-available measurement gap or a next-available off-duration of a DRX cycle after tuning the RF component to communicate over the first bandwidth of the channel.

At 420, the UE 115-b may retune, during a portion of the time resources that the UE 115-b is configured to reduce communications with the base station 105-b, the RF component from the first bandwidth of the channel to the second bandwidth of the first-active BWP. The retuning may occur after receiving the control message but before receiving DCI that requests the UE 115-b to switch from the first-active BWP to a second BWP having a third bandwidth and before identifying that the first-active BWP has been inactive for a duration that satisfies a threshold associated with an inactivity timer.

In some examples, at 425, the UE 115-b may enter a sleep mode during an off-duration of a DRX cycle (e.g., after the retuning). For example, the UE 115-b may receive a control message (e.g., the control message received at 405 or a different control message) including information about a configuration of a DRX cycle, and the UE 115-b may retune the RF component based on the configuration of the DRX cycle. The portion of the time resources for performing the retuning may be a first portion of an off-duration of the DRX cycle. In some cases, the UE 115-b may retune the RF component during the first portion of the off-duration of the DRX cycle and may enter a sleep mode (e.g., a relatively lower power state) during a second portion of the off-duration of the DRX cycle.

In some other examples, at 430, the UE 115-b may measure channel conditions during a measurement gap (e.g., after the retuning). For example, the UE 115-b may receive a control message (e.g., the control message received at 405 or a different control message) including information about a configuration of a measurement gap, and the UE 115-b may retune the RF component based on the configuration of the measurement gap. For example, the configuration of the measurement gap may include a gap offset, a measurement gap length, a measurement gap repetition period, a measurement gap timing advance (TA), or a combination thereof. In some cases, the UE 115-b may retune the RF component during a first portion of the measurement gap and may measure, during a second portion of the measurement gap, one or more channel conditions using one or more reference signals. In some examples, the UE 115-b may suspend communications with the base station 105-b during the measurement gap based on initially tuning the RF component to the first bandwidth after receiving the control message and on currently having a pending RF retuning procedure. The UE 115-b may perform the pending RF retuning procedure based on suspending the communications with the base station 105-b during the measurement gap.

At 435, the UE 115-b may communicate with the base station 105-b using the second bandwidth of the first-active BWP based on retuning the RF component of the UE 115-b.

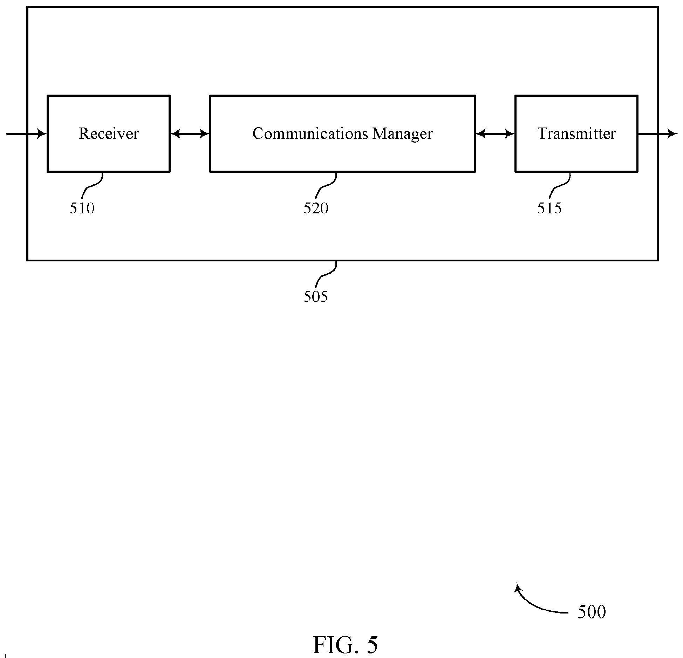

**FIG. 5** shows a block diagram 500 of a device 505 that supports BWP switching in accordance with aspects of the present disclosure. The device 505 may be an example of aspects of a UE 115 as described herein. The device 505 may include a receiver 510, a transmitter 515, and a communications manager 520. The device 505 may also include a processor. Each of these components may be in communication with one another (e.g., via one or more buses).

The receiver 510 may provide a means for receiving information such as packets, user data, control information, or any combination thereof associated with various information channels (e.g., control channels, data channels, information channels related to BWP switching). Information may be passed on to other components of the device 505. The receiver 510 may utilize a single antenna or a set of multiple antennas.

The transmitter 515 may provide a means for transmitting signals generated by other components of the device 505. For example, the transmitter 515 may transmit information such as packets, user data, control information, or any combination thereof associated with various information channels (e.g., control channels, data channels, information channels related to BWP switching). In some examples, the transmitter 515 may be co-located with a receiver 510 in a transceiver module. The transmitter 515 may utilize a single antenna or a set of multiple antennas.

The communications manager 520, the receiver 510, the transmitter 515, or various combinations thereof or various components thereof may be examples of means for performing various aspects of BWP switching as described herein. For example, the communications manager 520, the receiver 510, the transmitter 515, or various combinations or components thereof may support a method for performing one or more of the functions described herein.

In some examples, the communications manager 520, the receiver 510, the transmitter 515, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 520, the receiver 510, the transmitter 515, or various combinations or components thereof may be implemented in code (e.g., as communications management software or firmware) executed by a processor. If implemented in code executed by a processor, the functions of the communications manager 520, the receiver 510, the transmitter 515, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 520 may be configured to perform various operations (e.g., receiving, monitoring, transmitting) using or otherwise in cooperation with the receiver 510, the transmitter 515, or both. For example, the communications manager 520 may receive information from the receiver 510, send information to the transmitter 515, or be integrated in combination with the receiver 510, the transmitter 515, or both to receive information, transmit information, or perform various other operations as described herein.

The communications manager 520 may support wireless communication at a UE in accordance with examples as disclosed herein. For example, the communications manager 520 may be configured as or otherwise support a means for receiving a control message to modify an RRC configuration between the UE and a base station, the control message indicating a first-active BWP associated with a channel. The communications manager 520 may be configured as or otherwise support a means for tuning an RF component of the UE to communicate over a first bandwidth of the channel based on receiving the control message. The communications manager 520 may be configured as or otherwise support a means for retuning, during a portion of time resources that the UE is configured to reduce communications with the base station, the RF component of the UE from the first bandwidth to a second bandwidth of the first-active BWP. The communications manager 520 may be configured as or otherwise support a means for communicating with the base station using the second bandwidth of the first-active BWP based on retuning the RF component of the UE.

By including or configuring the communications manager 520 in accordance with examples as described herein, the device 505 (e.g., a processor controlling or otherwise coupled to the receiver 510, the transmitter 515, the communications manager 520, or a combination thereof) may support techniques for reducing a process overhead for the device 505. For example, retuning the RF component from the first bandwidth to a second bandwidth of the first-active BWP during the portion of the time resources that the UE is configured to reduce communications with the base station-as opposed to waiting for a DCI-based BWP switch event or the expiry of an inactivity timer-may allow the device 505 to switch from a relatively wider active bandwidth (e.g., a channel bandwidth) to a relatively narrower active bandwidth (e.g., corresponding to the first-active BWP). Operating using the narrower active bandwidth may reduce the processing overhead associated with monitoring the active bandwidth at the device 505, resulting in power savings at the device 505.

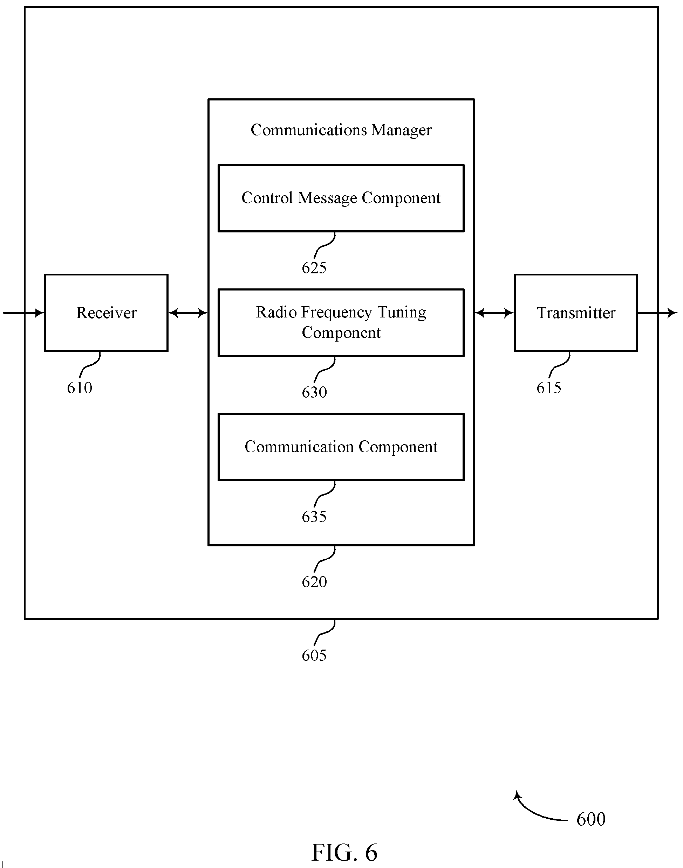

**FIG. 6** shows a block diagram 600 of a device 605 that supports BWP switching in accordance with aspects of the present disclosure. The device 605 may be an example of aspects of a device 505 or a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to BWP switching). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to BWP switching). In some examples, the transmitter 615 may be co-located with a receiver 610 in a transceiver module. The transmitter 615 may utilize a single antenna or a set of multiple antennas.

The device 605, or various components thereof, may be an example of means for performing various aspects of BWP switching as described herein. For example, the communications manager 620 may include a control message component 625, a radio frequency tuning component 630, a communication component 635, or any combination thereof. The communications manager 620 may be an example of aspects of a communications manager 520 as described herein. In some examples, the communications manager 620, or various components thereof, may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communication at a UE in accordance with examples as disclosed herein. The control message component 625 may be configured as or otherwise support a means for receiving a control message to modify an RRC configuration between the UE and a base station, the control message indicating a first-active BWP associated with a channel. The radio frequency tuning component 630 may be configured as or otherwise support a means for tuning an RF component of the UE to communicate over a first bandwidth of the channel based on receiving the control message. The radio frequency tuning component 630 may be configured as or otherwise support a means for retuning, during a portion of time resources that the UE is configured to reduce communications with the base station, the RF component of the UE from the first bandwidth to a second bandwidth of the first-active BWP. The communication component 635 may be configured as or otherwise support a means for communicating with the base station using the second bandwidth of the first-active BWP based on retuning the RF component of the UE.

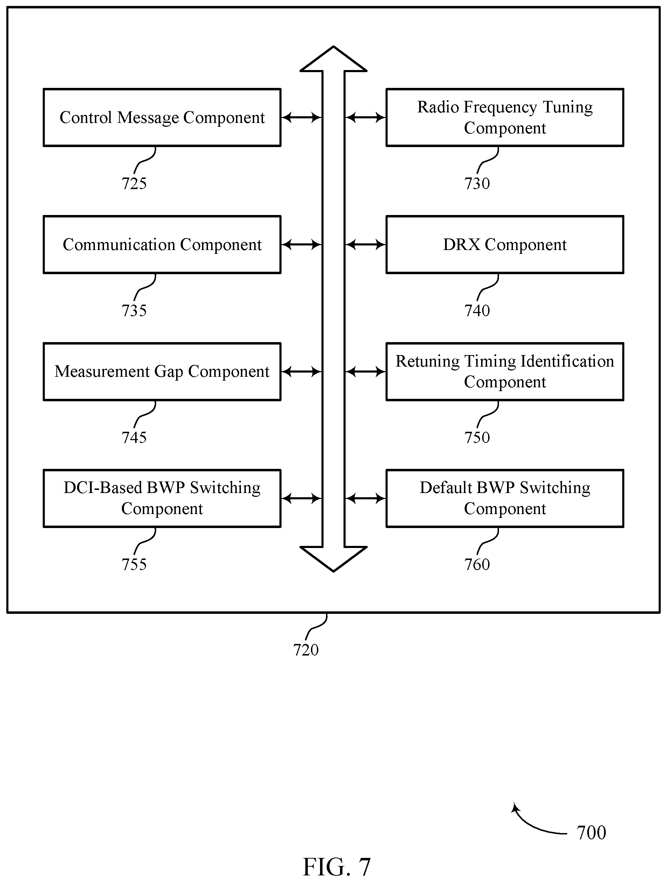

**FIG. 7** shows a block diagram 700 of a communications manager 720 that supports BWP switching in accordance with aspects of the present disclosure. The communications manager 720 may be an example of aspects of a communications manager 520, a communications manager 620, or both, as described herein. The communications manager 720, or various components thereof, may be an example of means for performing various aspects of BWP switching as described herein. For example, the communications manager 720 may include a control message component 725, a radio frequency tuning component 730, a communication component 735, a DRX component 740, a measurement gap component 745, a retuning timing identification component 750, a DCI-based BWP switching component 755, a default BWP switching component 760, or any combination thereof. Each of these components may communicate, directly or indirectly, with one another (e.g., via one or more buses).

The communications manager 720 may support wireless communication at a UE in accordance with examples as disclosed herein. The control message component 725 may be configured as or otherwise support a means for receiving a control message to modify an RRC configuration between the UE and a base station, the control message indicating a first-active BWP associated with a channel. The radio frequency tuning component 730 may be configured as or otherwise support a means for tuning an RF component of the UE to communicate over a first bandwidth of the channel based on receiving the control message. In some examples, the radio frequency tuning component 730 may be configured as or otherwise support a means for retuning, during a portion of time resources that the UE is configured to reduce communications with the base station, the RF component of the UE from the first bandwidth to a second bandwidth of the first-active BWP. The communication component 735 may be configured as or otherwise support a means for communicating with the base station using the second bandwidth of the first-active BWP based on retuning the RF component of the UE.

In some examples, the DRX component 740 may be configured as or otherwise support a means for receiving, in the control message, information about a configuration of a DRX cycle, where retuning the RF component is based on receiving the information about the configuration of the DRX cycle. In some examples, the portion of the time resources includes a first portion of an off-duration of a DRX cycle.

In some examples, the DRX component 740 may be configured as or otherwise support a means for entering, by the UE, a sleep mode during a first portion of an off-duration of a DRX cycle after retuning the RF component during a second portion of the off-duration of the DRX cycle.

In some examples, the portion of the time resources includes a first portion of a measurement gap in which the UE is configured to measure one or more channel conditions. In some examples, the measurement gap component 745 may be configured as or otherwise support a means for receiving, in the control message, information about a configuration of a measurement gap, where retuning the RF component is based on receiving the information about the configuration of the measurement gap. In some examples, the information about the configuration of the measurement gap includes a gap offset, a measurement gap length, a measurement gap repetition period, or a measurement gap TA, or a combination thereof.

In some examples, the measurement gap component 745 may be configured as or otherwise support a means for measuring, during a first portion of a measurement gap, one or more channel conditions using one or more reference signals after retuning the RF component during a second portion of the measurement gap. In some examples, the measurement gap component 745 may be configured as or otherwise support a means for suspending, by the UE, communications with the base station during a measurement gap based on tuning the RF component to the first bandwidth after receiving the control message, where retuning the RF component is based on suspending the communications with the base station during the measurement gap.

In some examples, the retuning timing identification component 750 may be configured as or otherwise support a means for identifying the portion of the time resources available for the UE to perform the retuning that occurs after tuning the RF component to the first bandwidth of the channel, where retuning the RF component of the UE is based on identifying the portion.

In some examples, the portion includes a next-available time resource after tuning the RF component of the UE to communicate over the first bandwidth of the channel. In some examples, the portion includes a next-available measurement gap or a next-available off-duration of a DRX cycle after tuning the RF component of the UE to communicate over the first bandwidth of the channel.

In some examples, the retuning timing identification component 750 may be configured as or otherwise support a means for identifying a first start time of a next occurrence of a measurement gap. In some examples, the retuning timing identification component 750 may be configured as or otherwise support a means for identifying a second start time of a next occurrence of an off-duration of a DRX cycle. In some examples, the retuning timing identification component 750 may be configured as or otherwise support a means for selecting the next occurrence of the measurement gap or the next occurrence of the off-duration of the DRX cycle as the portion of the time resources for retuning the RF component, where retuning the RF component is based on the selecting.

In some examples, the DCI-based BWP switching component 755 may be configured as or otherwise support a means for receiving DCI that requests the UE to switch from the first-active BWP to a second BWP having a third bandwidth based on retuning the RF component of the UE. In some examples, the DCI-based BWP switching component 755 may be configured as or otherwise support a means for retuning the RF component of the UE from the second bandwidth of the first-active BWP to the third bandwidth of the second BWP based on receiving the DCI. In some examples, retuning the RF component of the UE occurs after receiving the control message and before receiving DCI that requests the UE to switch from the first-active BWP to a second BWP having a third bandwidth.

In some examples, the default BWP switching component 760 may be configured as or otherwise support a means for identifying that the first-active BWP has been inactive for a duration that satisfies a threshold associated with an inactivity timer based on retuning the RF component of the UE. In some examples, the default BWP switching component 760 may be configured as or otherwise support a means for retuning the RF component of the UE from the second bandwidth of the first-active BWP to a default BWP having a third bandwidth based on identifying that the first-active BWP has been inactive for the duration that satisfies the threshold associated with the inactivity timer. In some examples, retuning the RF component of the UE occurs after receiving the control message and before identifying that the first-active BWP has been inactive for a duration that satisfies a threshold associated with an inactivity timer.

In some examples, the control message includes an RRC reconfiguration message. In some examples, the RRC reconfiguration message includes an IE indicating the first-active BWP associated with the RRC configuration between the UE and the base station. In some examples, the RRC reconfiguration message includes a second IE indicating a default BWP associated with the RRC configuration between the UE and the base station. Additionally or alternatively, the RRC reconfiguration message includes a second IE indicating a duration for a timer associated with an inactivity of an active BWP for communications between the UE and the base station.

In some examples, the first bandwidth is wider than and includes the second bandwidth.

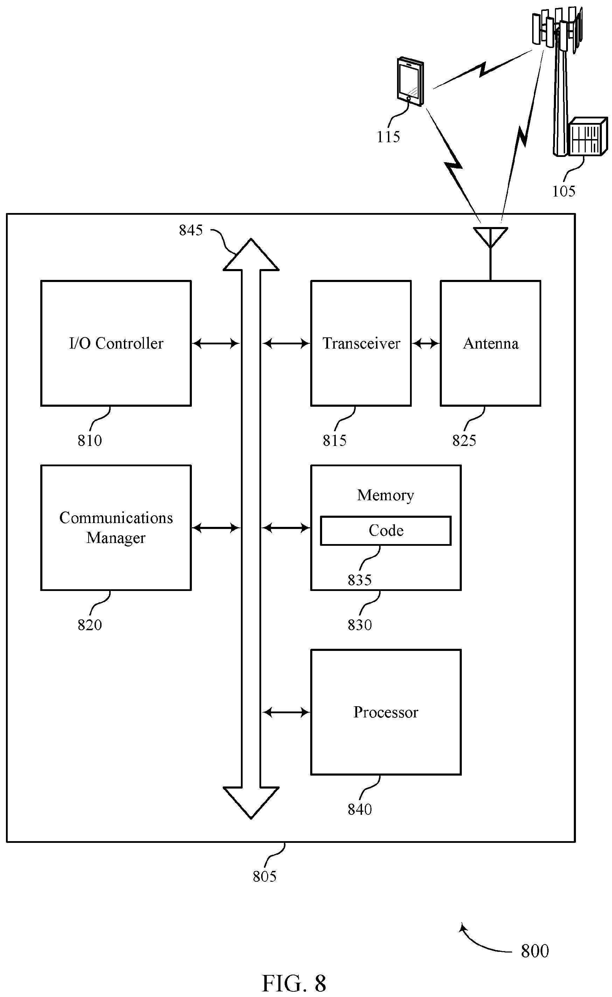

**FIG. 8** shows a diagram of a system 800 including a device 805 that supports BWP switching in accordance with aspects of the present disclosure. The device 805 may be an example of or include the components of a device 505, a device 605, or a UE 115 as described herein. The device 805 may communicate wirelessly with one or more base stations 105, UEs 115, or any combination thereof. The device 805 may include components for bi-directional voice and data communications including components for transmitting and receiving communications, such as a communications manager 820, an input/output (I/O) controller 810, a transceiver 815, an antenna 825, a memory 830, code 835, and a processor 840. These components may be in electronic communication or otherwise coupled (e.g., operatively, communicatively, functionally, electronically, electrically) via one or more buses (e.g., a bus 845).

The I/O controller 810 may manage input and output signals for the device 805. The I/O controller 810 may also manage peripherals not integrated into the device 805. In some cases, the I/O controller 810 may represent a physical connection or port to an external peripheral. In some cases, the I/O controller 810 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 810 may represent or interact with a modem, a keyboard, a mouse, a touchscreen, or a similar device. In some cases, the I/O controller 810 may be implemented as part of a processor, such as the processor 840. In some cases, a user may interact with the device 805 via the I/O controller 810 or via hardware components controlled by the I/O controller 810.

In some cases, the device 805 may include a single antenna 825. However, in some other cases, the device 805 may have more than one antenna 825, which may be capable of concurrently transmitting or receiving multiple wireless transmissions. The transceiver 815 may communicate bi-directionally, via the one or more antennas 825, wired, or wireless links as described herein. For example, the transceiver 815 may represent a wireless transceiver and may communicate bi-directionally with another wireless transceiver. The transceiver 815 may also include a modem to modulate the packets, to provide the modulated packets to one or more antennas 825 for transmission, and to demodulate packets received from the one or more antennas 825. The transceiver 815, or the transceiver 815 and one or more antennas 825, may be an example of a transmitter 515, a transmitter 615, a receiver 510, a receiver 610, or any combination thereof or component thereof, as described herein.

The memory 830 may include random access memory (RAM) and read-only memory (ROM). The memory 830 may store computer-readable, computer-executable code 835 including instructions that, when executed by the processor 840, cause the device 805 to perform various functions described herein. The code 835 may be stored in a non-transitory computer-readable medium such as system memory or another type of memory. In some cases, the code 835 may not be directly executable by the processor 840 but may cause a computer (e.g., when compiled and executed) to perform functions described herein. In some cases, the memory 830 may contain, among other things, a basic I/O system (BIOS) which may control basic hardware or software operation such as the interaction with peripheral components or devices.

The processor 840 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 840 may be configured to operate a memory array using a memory controller. In some other cases, a memory controller may be integrated into the processor 840. The processor 840 may be configured to execute computer-readable instructions stored in a memory (e.g., the memory 830) to cause the device 805 to perform various functions (e.g., functions or tasks supporting BWP switching). For example, the device 805 or a component of the device 805 may include a processor 840 and memory 830 coupled to the processor 840, the processor 840 and memory 830 configured to perform various functions described herein.

The communications manager 820 may support wireless communication at a UE in accordance with examples as disclosed herein. For example, the communications manager 820 may be configured as or otherwise support a means for receiving a control message to modify an RRC configuration between the UE and a base station, the control message indicating a first-active BWP associated with a channel. The communications manager 820 may be configured as or otherwise support a means for tuning an RF component of the UE to communicate over a first bandwidth of the channel based on receiving the control message. The communications manager 820 may be configured as or otherwise support a means for retuning, during a portion of time resources that the UE is configured to reduce communications with the base station, the RF component of the UE from the first bandwidth to a second bandwidth of the first-active BWP. The communications manager 820 may be configured as or otherwise support a means for communicating with the base station using the second bandwidth of the first-active BWP based on retuning the RF component of the UE.

By including or configuring the communications manager 820 in accordance with examples as described herein, the device 805 may support techniques for retuning an RF component and performing a BWP switch without missing communications with a base station 105. For example, the device 805 may perform the retuning during the portion of the time resources that the device 805 is configured to reduce communications with the base station, such that the base station may refrain from communicating with the device 805 during the timer resources. Additionally, the device 805 may achieve additional power savings by performing the retuning before a DCI-based BWP switch event and before expiry of an inactivity timer. For example, the device 805 may spend relatively more time camped on the first-active BWP and relatively less time camped on the channel bandwidth as compared to a device that performs RF retuning or BWP switching during a DCI-based BWP switch event or after expiry of an inactivity timer. Tuning RF components to and camping on the relatively narrower first-active BWP may correspond to power savings as compared to tuning RF components to and camping on the channel bandwidth.

In some examples, the communications manager 820 may be configured to perform various operations (e.g., receiving, monitoring, transmitting) using or otherwise in cooperation with the transceiver 815, the one or more antennas 825, or any combination thereof. Although the communications manager 820 is illustrated as a separate component, in some examples, one or more functions described with reference to the communications manager 820 may be supported by or performed by the processor 840, the memory 830, the code 835, or any combination thereof. For example, the code 835 may include instructions executable by the processor 840 to cause the device 805 to perform various aspects of BWP switching as described herein, or the processor 840 and the memory 830 may be otherwise configured to perform or support such operations.

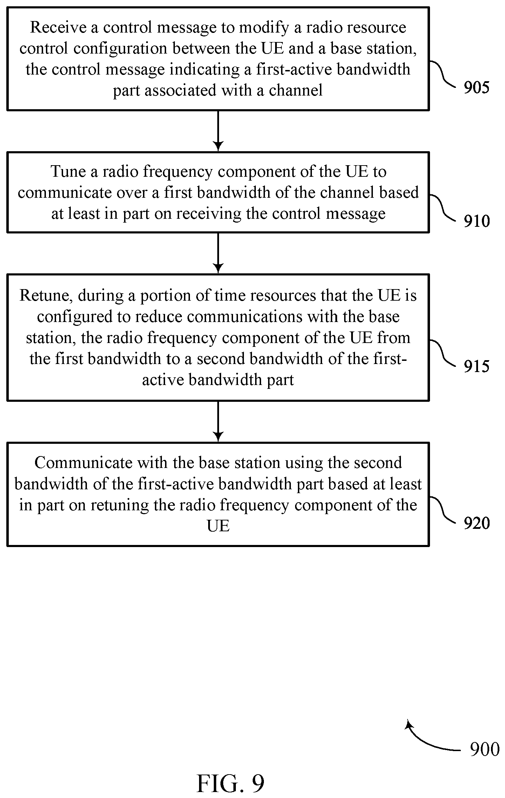

**FIG. 9** shows a flowchart illustrating a method 900 that supports BWP switching in accordance with aspects of the present disclosure. The operations of the method 900 may be implemented by a UE or its components as described herein. For example, the operations of the method 900 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 905, the method may include receiving a control message to modify an RRC configuration between the UE and a base station, the control message indicating a first-active BWP associated with a channel. The operations of 905 may be performed in accordance with examples as disclosed herein. In some examples, aspects of the operations of 905 may be performed by a control message component 725 as described with reference to FIG. 7.

At 910, the method may include tuning an RF component of the UE to communicate over a first bandwidth of the channel based on receiving the control message. The operations of 910 may be performed in accordance with examples as disclosed herein. In some examples, aspects of the operations of 910 may be performed by a radio frequency tuning component 730 as described with reference to FIG. 7.

At 915, the method may include retuning, during a portion of time resources that the UE is configured to reduce communications with the base station, the RF component of the UE from the first bandwidth to a second bandwidth of the first-active BWP. The operations of 915 may be performed in accordance with examples as disclosed herein. In some examples, aspects of the operations of 915 may be performed by a radio frequency tuning component 730 as described with reference to FIG. 7.

At 920, the method may include communicating with the base station using the second bandwidth of the first-active BWP based on retuning the RF component of the UE. The operations of 920 may be performed in accordance with examples as disclosed herein. In some examples, aspects of the operations of 920 may be performed by a communication component 735 as described with reference to FIG. 7.

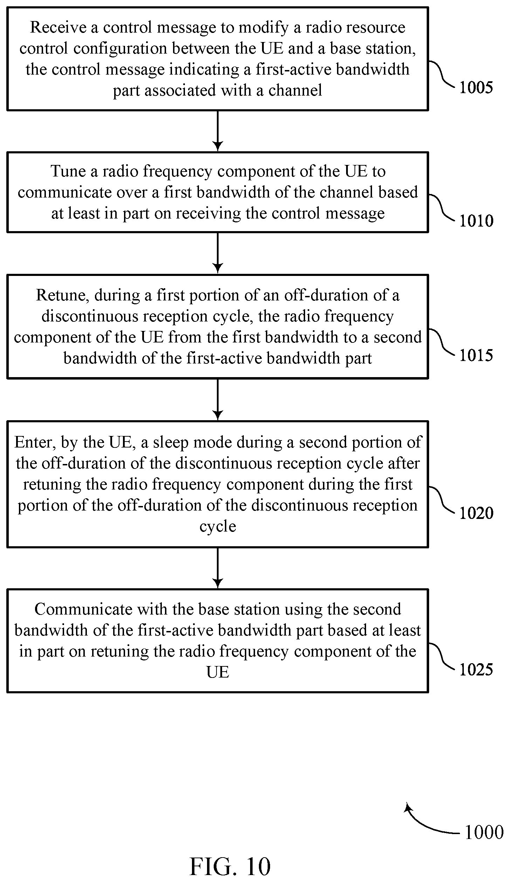

**FIG. 10** shows a flowchart illustrating a method 1000 that supports BWP switching in accordance with aspects of the present disclosure. The operations of the method 1000 may be implemented by a UE or its components as described herein. For example, the operations of the method 1000 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1005, the method may include receiving a control message to modify an RRC configuration between the UE and a base station, the control message indicating a first-active BWP associated with a channel. The operations of 1005 may be performed in accordance with examples as disclosed herein. In some examples, aspects of the operations of 1005 may be performed by a control message component 725 as described with reference to FIG. 7.

At 1010, the method may include tuning an RF component of the UE to communicate over a first bandwidth of the channel based on receiving the control message. The operations of 1010 may be performed in accordance with examples as disclosed herein. In some examples, aspects of the operations of 1010 may be performed by a radio frequency tuning component 730 as described with reference to FIG. 7.

At 1015, the method may include retuning, during a first portion of an off-duration of a DRX cycle, the RF component of the UE from the first bandwidth to a second bandwidth of the first-active BWP. The operations of 1015 may be performed in accordance with examples as disclosed herein. In some examples, aspects of the operations of 1015 may be performed by a radio frequency tuning component 730 as described with reference to FIG. 7.

At 1020, the method may include entering, by the UE, a sleep mode during a second portion of the off-duration of the DRX cycle after retuning the RF component during the first portion of the off-duration of the DRX cycle. The operations of 1020 may be performed in accordance with examples as disclosed herein. In some examples, aspects of the operations of 1020 may be performed by a DRX component 740 as described with reference to FIG. 7.

At 1025, the method may include communicating with the base station using the second bandwidth of the first-active BWP based on retuning the RF component of the UE. The operations of 1025 may be performed in accordance with examples as disclosed herein. In some examples, aspects of the operations of 1025 may be performed by a communication component 735 as described with reference to FIG. 7.

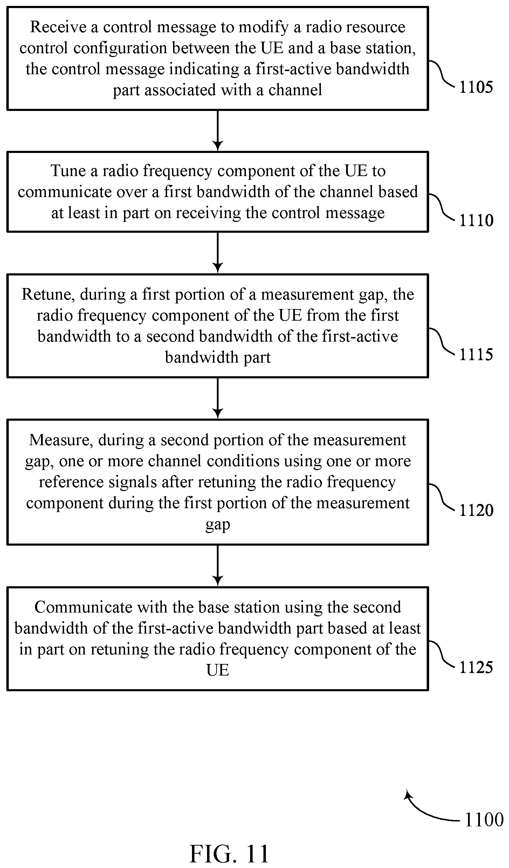

**FIG. 11** shows a flowchart illustrating a method 1100 that supports BWP switching in accordance with aspects of the present disclosure. The operations of the method 1100 may be implemented by a UE or its components as described herein. For example, the operations of the method 1100 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1105, the method may include receiving a control message to modify an RRC configuration between the UE and a base station, the control message indicating a first-active BWP associated with a channel. The operations of 1105 may be performed in accordance with examples as disclosed herein. In some examples, aspects of the operations of 1105 may be performed by a control message component 725 as described with reference to FIG. 7.

At 1110, the method may include tuning an RF component of the UE to communicate over a first bandwidth of the channel based on receiving the control message. The operations of 1110 may be performed in accordance with examples as disclosed herein. In some examples, aspects of the operations of 1110 may be performed by a radio frequency tuning component 730 as described with reference to FIG. 7.

At 1115, the method may include retuning, during a first portion of a measurement gap, the RF component of the UE from the first bandwidth to a second bandwidth of the first-active BWP. The operations of 1115 may be performed in accordance with examples as disclosed herein. In some examples, aspects of the operations of 1115 may be performed by a radio frequency tuning component 730 as described with reference to FIG. 7.

At 1120, the method may include measuring, during a second portion of the measurement gap, one or more channel conditions using one or more reference signals after retuning the RF component during the first portion of the measurement gap. The operations of 1120 may be performed in accordance with examples as disclosed herein. In some examples, aspects of the operations of 1120 may be performed by a measurement gap component 745 as described with reference to FIG. 7.

At 1125, the method may include communicating with the base station using the second bandwidth of the first-active BWP based on retuning the RF component of the UE. The operations of 1125 may be performed in accordance with examples as disclosed herein. In some examples, aspects of the operations of 1125 may be performed by a communication component 735 as described with reference to FIG. 7.

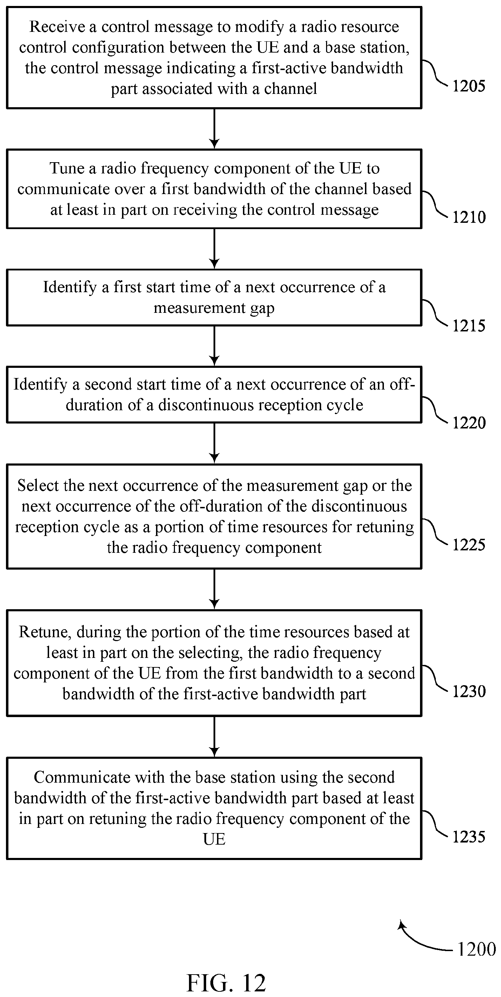

**FIG. 12** shows a flowchart illustrating a method 1200 that supports BWP switching in accordance with aspects of the present disclosure. The operations of the method 1200 may be implemented by a UE or its components as described herein. For example, the operations of the method 1200 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1205, the method may include receiving a control message to modify an RRC configuration between the UE and a base station, the control message indicating a first-active BWP associated with a channel. The operations of 1205 may be performed in accordance with examples as disclosed herein. In some examples, aspects of the operations of 1205 may be performed by a control message component 725 as described with reference to FIG. 7.

At 1210, the method may include tuning an RF component of the UE to communicate over a first bandwidth of the channel based on receiving the control message. The operations of 1210 may be performed in accordance with examples as disclosed herein. In some examples, aspects of the operations of 1210 may be performed by a radio frequency tuning component 730 as described with reference to FIG. 7.

At 1215, the method may include identifying a first start time of a next occurrence of a measurement gap. The operations of 1215 may be performed in accordance with examples as disclosed herein. In some examples, aspects of the operations of 1215 may be performed by a retuning timing identification component 750 as described with reference to FIG. 7.

At 1220, the method may include identifying a second start time of a next occurrence of an off-duration of a DRX cycle. The operations of 1220 may be performed in accordance with examples as disclosed herein. In some examples, aspects of the operations of 1220 may be performed by a retuning timing identification component 750 as described with reference to FIG. 7.

At 1225, the method may include selecting the next occurrence of the measurement gap or the next occurrence of the off-duration of the DRX cycle as a portion of time resources for retuning the RF component. The operations of 1225 may be performed in accordance with examples as disclosed herein. In some examples, aspects of the operations of 1225 may be performed by a retuning timing identification component 750 as described with reference to FIG. 7.

At 1230, the method may include retuning, during the portion of the time resources based on the selecting, the RF component of the UE from the first bandwidth to a second bandwidth of the first-active BWP. The operations of 1230 may be performed in accordance with examples as disclosed herein. In some examples, aspects of the operations of 1230 may be performed by a radio frequency tuning component 730 as described with reference to FIG. 7.

At 1235, the method may include communicating with the base station using the second bandwidth of the first-active BWP based on retuning the RF component of the UE. The operations of 1235 may be performed in accordance with examples as disclosed herein. In some examples, aspects of the operations of 1235 may be performed by a communication component 735 as described with reference to FIG. 7.

The following provides an overview of aspects of the present disclosure:
Aspect 1: A method for wireless communication at a UE, comprising: receiving a control message to modify a radio resource control configuration between the UE and a base station, the control message indicating a first-active bandwidth part associated with a channel; tuning a radio frequency component of the UE to communicate over a first bandwidth of the channel based at least in part on receiving the control message; retuning, during a portion of time resources that the UE is configured to reduce communications with the base station, the radio frequency component of the UE from the first bandwidth to a second bandwidth of the first-active bandwidth part; and communicating with the base station using the second bandwidth of the first-active bandwidth part based at least in part on retuning the radio frequency component of the UE.
Aspect 2: The method of aspect 1, further comprising: receiving, in the control message, information about a configuration of a discontinuous reception cycle, wherein retuning the radio frequency component is based at least in part on receiving the information about the configuration of the discontinuous reception cycle.
Aspect 3: The method of any of aspects 1 through 2, wherein the portion of the time resources comprises a first portion of an off-duration of a discontinuous reception cycle.
Aspect 4: The method of any of aspects 1 through 3, further comprising: entering, by the UE, a sleep mode during a first portion of an off-duration of a discontinuous reception cycle after retuning the radio frequency component during a second portion of the off-duration of the discontinuous reception cycle.
Aspect 5: The method of aspect 1, wherein the portion of the time resources comprises a first portion of a measurement gap in which the UE is configured to measure one or more channel conditions.
Aspect 6: The method of any of aspects 1 and 5, further comprising: receiving, in the control message, information about a configuration of a measurement gap, wherein retuning the radio frequency component is based at least in part on receiving the information about the configuration of the measurement gap.
Aspect 7: The method of aspect 6, wherein the information about the configuration of the measurement gap includes a gap offset, a measurement gap length, a measurement gap repetition period, or a measurement gap timing advance, or a combination thereof.
Aspect 8: The method of any of aspects 1 and 5 through 7, further comprising: measuring, during a first portion of a measurement gap, one or more channel conditions using one or more reference signals after retuning the radio frequency component during a second portion of the measurement gap.
Aspect 9: The method of any of aspects 1 and 5 through 8, further comprising: suspending, by the UE, communications with the base station during a measurement gap based at least in part on tuning the radio frequency component to the first bandwidth after receiving the control message, wherein retuning the radio frequency component is based at least in part on suspending the communications with the base station during the measurement gap.
Aspect 10: The method of any of aspects 1 through 9, further comprising: identifying the portion of the time resources available for the UE to perform the retuning that occurs after tuning the radio frequency component to the first bandwidth of the channel, wherein retuning the radio frequency component of the UE is based at least in part on identifying the portion.
Aspect 11: The method of aspect 10, wherein the portion comprises a next-available time resource after tuning the radio frequency component of the UE to communicate over the first bandwidth of the channel.
Aspect 12: The method of any of aspects 10 through 11, wherein the portion comprises a next-available measurement gap or a next-available off-duration of a discontinuous reception cycle after tuning the radio frequency component of the UE to communicate over the first bandwidth of the channel.
Aspect 13: The method of any of aspects 10 through 12, further comprising: identifying a first start time of a next occurrence of a measurement gap; identifying a second start time of a next occurrence of an off-duration of a discontinuous reception cycle; and selecting the next occurrence of the measurement gap or the next occurrence of the off-duration of the discontinuous reception cycle as the portion of the time resources for retuning the radio frequency component, wherein retuning the radio frequency component is based at least in part on the selecting.
Aspect 14: The method of any of aspects 1 through 13, further comprising: receiving downlink control information that requests the UE to switch from the first-active bandwidth part to a second bandwidth part having a third bandwidth based at least in part on retuning the radio frequency component of the UE; and retuning the radio frequency component of the UE from the second bandwidth of the first-active bandwidth part to the third bandwidth of the second bandwidth part based at least in part on receiving the downlink control information.
Aspect 15: The method of any of aspects 1 through 14, wherein retuning the radio frequency component of the UE occurs after receiving the control message and before receiving downlink control information that requests the UE to switch from the first-active bandwidth part to a second bandwidth part having a third bandwidth.
Aspect 16: The method of any of aspects 1 through 15, further comprising: identifying that the first-active bandwidth part has been inactive for a duration that satisfies a threshold associated with an inactivity timer based at least in part on retuning the radio frequency component of the UE; and retuning the radio frequency component of the UE from the second bandwidth of the first-active bandwidth part to a default bandwidth part having a third bandwidth based at least in part on identifying that the first-active bandwidth part has been inactive for the duration that satisfies the threshold associated with the inactivity timer.
Aspect 17: The method of any of aspects 1 through 16, wherein retuning the radio frequency component of the UE occurs after receiving the control message and before identifying that the first-active bandwidth part has been inactive for a duration that satisfies a threshold associated with an inactivity timer.
Aspect 18: The method of any of aspects 1 through 17, wherein the control message comprises a radio resource control reconfiguration message; and the radio resource control reconfiguration message includes an information element indicating the first-active bandwidth part associated with the radio resource control configuration between the UE and the base station.
Aspect 19: The method of aspect 18, wherein the radio resource control reconfiguration message includes a second information element indicating a default bandwidth part associated with the radio resource control configuration between the UE and the base station.
Aspect 20: The method of any of aspects 18 through 19, wherein the radio resource control reconfiguration message includes a second information element indicating a duration for a timer associated with an inactivity of an active bandwidth part for communications between the UE and the base station.
Aspect 21: The method of any of aspects 1 through 20, wherein the first bandwidth is wider than and comprises the second bandwidth.
Aspect 22: An apparatus for wireless communication at a UE, comprising a processor; memory coupled with the processor; and instructions stored in the memory and executable by the processor to cause the apparatus to perform a method of any of aspects 1 through 21.
Aspect 23: An apparatus for wireless communication at a UE, comprising at least one means for performing a method of any of aspects 1 through 21.
Aspect 24: A non-transitory computer-readable medium storing code for wireless communication at a UE, the code comprising instructions executable by a processor to perform a method of any of aspects 1 through 21.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.
**In the following, further embodiments are described to facilitate the understanding of the invention:**
1. An apparatus for wireless communication at a user equipment (UE), comprising:
   a processor;
   memory coupled with the processor; and
   instructions stored in the memory and executable by the processor to cause the apparatus to:
      receive a control message to modify a radio resource control configuration between the UE and a base station, the control message indicating a first-active bandwidth part associated with a channel;
      tune a radio frequency component of the UE to communicate over a first bandwidth of the channel based at least in part on receiving the control message;
      retune, during a portion of time resources that the UE is configured to reduce communications with the base station, the radio frequency component of the UE from the first bandwidth to a second bandwidth of the first-active bandwidth part; and
      communicate with the base station using the second bandwidth of the first-active bandwidth part based at least in part on retuning the radio frequency component of the UE.
2. The apparatus of embodiment 1, wherein the instructions are further executable by the processor to cause the apparatus to:
   receive, in the control message, information about a configuration of a discontinuous reception cycle, wherein the instructions executable by the processor to cause the apparatus to retune the radio frequency component are executable by the processor to cause the apparatus to retune the radio frequency component based at least in part on receiving the information about the configuration of the discontinuous reception cycle.
3. The apparatus of embodiment 1, wherein the portion of the time resources comprises a first portion of an off-duration of a discontinuous reception cycle.
4. The apparatus of embodiment 1, wherein the instructions are further executable by the processor to cause the apparatus to:
   enter, by the UE, a sleep mode during a first portion of an off-duration of a discontinuous reception cycle after retuning the radio frequency component during a second portion of the off-duration of the discontinuous reception cycle.
5. The apparatus of embodiment 1, wherein the portion of the time resources comprises a first portion of a measurement gap in which the UE is configured to measure one or more channel conditions.
6. The apparatus of embodiment 1, wherein the instructions are further executable by the processor to cause the apparatus to:
   receive, in the control message, information about a configuration of a measurement gap, wherein the instructions executable by the processor to cause the apparatus to retune the radio frequency component are executable by the processor to cause the apparatus to retune the radio frequency component based at least in part on receiving the information about the configuration of the measurement gap.
7. The apparatus of embodiment 6, wherein the information about the configuration of the measurement gap includes a gap offset, a measurement gap length, a measurement gap repetition period, or a measurement gap timing advance, or a combination thereof.
8. The apparatus of embodiment 1, wherein the instructions are further executable by the processor to cause the apparatus to:
   measure, during a first portion of a measurement gap, one or more channel conditions using one or more reference signals after retuning the radio frequency component during a second portion of the measurement gap.
9. The apparatus of embodiment 1, wherein the instructions are further executable by the processor to cause the apparatus to:
   suspend, by the UE, communications with the base station during a measurement gap based at least in part on tuning the radio frequency component to the first bandwidth after receiving the control message, wherein the instructions executable by the processor to cause the apparatus to retune the radio frequency component are executable by the processor to cause the apparatus to retune the radio frequency component based at least in part on suspending the communications with the base station during the measurement gap.
10. The apparatus of embodiment 1, wherein the instructions are further executable by the processor to cause the apparatus to:
   identify the portion of the time resources available for the UE to perform the retuning that occurs after tuning the radio frequency component to the first bandwidth of the channel, wherein the instructions executable by the processor to cause the apparatus to retune the radio frequency component are executable by the processor to cause the apparatus to retune the radio frequency component based at least in part on identifying the portion.
11. The apparatus of embodiment 10, wherein the portion comprises a next-available time resource after tuning the radio frequency component of the UE to communicate over the first bandwidth of the channel.
12. The apparatus of embodiment 10, wherein the portion comprises a next-available measurement gap or a next-available off-duration of a discontinuous reception cycle after tuning the radio frequency component of the UE to communicate over the first bandwidth of the channel.
13. The apparatus of embodiment 10, wherein the instructions are further executable by the processor to cause the apparatus to:
   identify a first start time of a next occurrence of a measurement gap;
   identify a second start time of a next occurrence of an off-duration of a discontinuous reception cycle; and
   select the next occurrence of the measurement gap or the next occurrence of the off-duration of the discontinuous reception cycle as the portion of the time resources for retuning the radio frequency component, wherein the instructions executable by the processor to cause the apparatus to retune the radio frequency component are executable by the processor to cause the apparatus to retune the radio frequency component based at least in part on the selecting.
14. The apparatus of embodiment 1, wherein the instructions are further executable by the processor to cause the apparatus to:
   receive downlink control information that requests the UE to switch from the first-active bandwidth part to a second bandwidth part having a third bandwidth based at least in part on retuning the radio frequency component of the UE; and
   retune the radio frequency component of the UE from the second bandwidth of the first-active bandwidth part to the third bandwidth of the second bandwidth part based at least in part on receiving the downlink control information.
15. The apparatus of embodiment 1, wherein retuning the radio frequency component of the UE occurs after receiving the control message and before receiving downlink control information that requests the UE to switch from the first-active bandwidth part to a second bandwidth part having a third bandwidth.
16. The apparatus of embodiment 1, wherein the instructions are further executable by the processor to cause the apparatus to:
   identify that the first-active bandwidth part has been inactive for a duration that satisfies a threshold associated with an inactivity timer based at least in part on retuning the radio frequency component of the UE; and
   retune the radio frequency component of the UE from the second bandwidth of the first-active bandwidth part to a default bandwidth part having a third bandwidth based at least in part on identifying that the first-active bandwidth part has been inactive for the duration that satisfies the threshold associated with the inactivity timer.
17. The apparatus of embodiment 1, wherein retuning the radio frequency component of the UE occurs after receiving the control message and before identifying that the first-active bandwidth part has been inactive for a duration that satisfies a threshold associated with an inactivity timer.
18. The apparatus of embodiment 1, wherein:
   the control message comprises a radio resource control reconfiguration message; and
   the radio resource control reconfiguration message includes an information element indicating the first-active bandwidth part associated with the radio resource control configuration between the UE and the base station.
19. The apparatus of embodiment 18, wherein the radio resource control reconfiguration message includes a second information element indicating a default bandwidth part associated with the radio resource control configuration between the UE and the base station.
20. The apparatus of embodiment 18, wherein the radio resource control reconfiguration message includes a second information element indicating a duration for a timer associated with an inactivity of an active bandwidth part for communications between the UE and the base station.
21. The apparatus of embodiment 1, wherein the first bandwidth is wider than and comprises the second bandwidth.
22. A method for wireless communication at a user equipment (UE), comprising:
   receiving a control message to modify a radio resource control configuration between the UE and a base station, the control message indicating a first-active bandwidth part associated with a channel;
   tuning a radio frequency component of the UE to communicate over a first bandwidth of the channel based at least in part on receiving the control message;
   retuning, during a portion of time resources that the UE is configured to reduce communications with the base station, the radio frequency component of the UE from the first bandwidth to a second bandwidth of the first-active bandwidth part; and
   communicating with the base station using the second bandwidth of the first-active bandwidth part based at least in part on retuning the radio frequency component of the UE.
23. The method of embodiment 22, further comprising:
   receiving, in the control message, information about a configuration of a discontinuous reception cycle, wherein retuning the radio frequency component is based at least in part on receiving the information about the configuration of the discontinuous reception cycle.
24. The method of embodiment 22, further comprising:
   entering, by the UE, a sleep mode during a first portion of an off-duration of a discontinuous reception cycle after retuning the radio frequency component during a second portion of the off-duration of the discontinuous reception cycle.
25. The method of embodiment 22, further comprising:
   receiving, in the control message, information about a configuration of a measurement gap, wherein retuning the radio frequency component is based at least in part on receiving the information about the configuration of the measurement gap.
26. The method of embodiment 22, further comprising:
   measuring, during a first portion of a measurement gap, one or more channel conditions using one or more reference signals after retuning the radio frequency component during a second portion of the measurement gap.
27. The method of embodiment 22, further comprising:
   identifying the portion of the time resources available for the UE to perform the retuning that occurs after tuning the radio frequency component to the first bandwidth of the channel, wherein retuning the radio frequency component of the UE is based at least in part on identifying the portion.
28. The method of embodiment 27, further comprising:
   identifying a first start time of a next occurrence of a measurement gap;
   identifying a second start time of a next occurrence of an off-duration of a discontinuous reception cycle; and
   selecting the next occurrence of the measurement gap or the next occurrence of the off-duration of the discontinuous reception cycle as the portion of the time resources for retuning the radio frequency component, wherein retuning the radio frequency component is based at least in part on the selecting.
29. An apparatus for wireless communication at a user equipment (UE), comprising:
   means for receiving a control message to modify a radio resource control configuration between the UE and a base station, the control message indicating a first-active bandwidth part associated with a channel;
   means for tuning a radio frequency component of the UE to communicate over a first bandwidth of the channel based at least in part on receiving the control message;
   means for retuning, during a portion of time resources that the UE is configured to reduce communications with the base station, the radio frequency component of the UE from the first bandwidth to a second bandwidth of the first-active bandwidth part; and
   means for communicating with the base station using the second bandwidth of the first-active bandwidth part based at least in part on retuning the radio frequency component of the UE.
30. A non-transitory computer-readable medium storing code for wireless communication at a user equipment (UE), the code comprising instructions executable by a processor to:
   receive a control message to modify a radio resource control configuration between the UE and a base station, the control message indicating a first-active bandwidth part associated with a channel;
   tune a radio frequency component of the UE to communicate over a first bandwidth of the channel based at least in part on receiving the control message;
   retune, during a portion of time resources that the UE is configured to reduce communications with the base station, the radio frequency component of the UE from the first bandwidth to a second bandwidth of the first-active bandwidth part; and
   communicate with the base station using the second bandwidth of the first-active bandwidth part based at least in part on retuning the radio frequency component of the UE.

## Claims

1. A user equipment, UE, comprising:
one or more processors; and
one or more memories coupled with the one or more processors and storing instructions executable by the one or more processors to cause the UE to:
receive a control message to modify a radio resource control configuration between the UE and a network device, the control message indicating a first-active bandwidth part associated with a channel;
tune a radio frequency component of the UE, to switch to the first-active bandwidth part from another bandwidth part, to a first bandwidth of the channel based at least in part on receiving the control message and communicate with the network device using the first bandwidth of the channel; and
retune, during a portion of time resources that the UE is configured to reduce communications with the network device, the radio frequency component of the UE from the first bandwidth of the channel to the first-active bandwidth part,
wherein the retuning is based at least in part on identifying the portion of the time resources available for the UE to perform the retuning that occurs after tuning the radio frequency component to the first bandwidth of the channel; and
communicate with the network device using the first-active bandwidth part based at least in part on retuning the radio frequency component of the UE.

2. The UE according to claim 1, the first-active bandwidth part being a portion of the first bandwidth of the channel.

3. The UE according to claim 1 or 2, the first bandwidth of the channel being a full bandwidth of the channel.

4. The UE according to one of claims 1 to 3, wherein the portion of the time resources comprises a first portion of an off-duration of a discontinuous reception cycle.

5. The UE according to one of claims 1 to 4, wherein the portion of the time resources comprises a first portion of a measurement gap in which the UE is configured to measure one or more channel conditions.

6. The UE according to one of claims 1 to 5, wherein:
the control message comprises a radio resource control reconfiguration message; and
the radio resource control reconfiguration message includes an information element indicating the first-active bandwidth part associated with the radio resource control configuration between the UE and the network device.

7. The UE according to claim 6, wherein the radio resource control reconfiguration message includes a second information element indicating a default bandwidth part associated with the radio resource control configuration between the UE and the network device.

8. The UE according to claim 6, wherein the radio resource control reconfiguration message includes a second information element indicating a duration for a timer associated with an inactivity of an active bandwidth part for communications between the UE and the network device.

9. The UE according to one of claims 1 to 8, wherein the first bandwidth is wider than and comprises the second bandwidth.

10. The UE according to one of claims 1 to 9, wherein retuning the radio frequency component of the UE occurs after receiving the control message and before receiving downlink control information that requests the UE to switch from the first-active bandwidth part to a second bandwidth part having a third bandwidth.

11. The UE according to one of claims 1 to 10, wherein the portion comprises a next-available time resource after tuning the radio frequency component of the UE to communicate over the first bandwidth of the channel.

12. The UE according to one of claims 1 to 11, wherein the portion comprises a next-available measurement gap or a next-available off-duration of a discontinuous reception cycle after tuning the radio frequency component of the UE to communicate over the first bandwidth of the channel.

13. The UE according to one of claims 1 to 12, wherein the instructions are further executable by the processor to cause the apparatus to:
identify a first start time of a next occurrence of a measurement gap;
identify a second start time of a next occurrence of an off-duration of a discontinuous reception cycle; and
select the next occurrence of the measurement gap or the next occurrence of the off-duration of the discontinuous reception cycle as the portion of the time resources for retuning the radio frequency component, wherein the instructions executable by the processor to cause the apparatus to retune the radio frequency component are executable by the processor to cause the apparatus to retune the radio frequency component based at least in part on the selecting.

14. A method for wireless communication at a user equipment, UE, comprising:
receiving a control message to modify a radio resource control configuration between the UE and a network device, the control message indicating a first-active bandwidth part associated with a channel;
tuning a radio frequency component of the UE, to switch to the first-active bandwidth part from another bandwidth part, to a first bandwidth of the channel based at least in part on receiving the control message and communicate with the network device using the first bandwidth of the channel; and
retuning, during a portion of time resources that the UE is configured to reduce communications with the network device, the radio frequency component of the UE from the first bandwidth of the channel to the first-active bandwidth part,
wherein the retuning is based at least in part on identifying the portion of the time resources available for the UE to perform the retuning that occurs after tuning the radio frequency component to the first bandwidth of the channel; and
communicating with the network device using the first-active bandwidth part based at least in part on retuning the radio frequency component of the UE.

15. A non-transitory computer-readable medium storing code for wireless communication at a user equipment, UE, the code comprising instructions executable by a processor to:
receive a control message to modify a radio resource control configuration between the UE and a network device, the control message indicating a first-active bandwidth part associated with a channel;
tune a radio frequency component of the UE, to switch to the first-active bandwidth part from another bandwidth part, to a first bandwidth of the channel based at least in part on receiving the control message and communicate with the network device using the first bandwidth of the channel; and
retune, during a portion of time resources that the UE is configured to reduce communications with the network device, the radio frequency component of the UE from the first bandwidth of the channel to the first-active bandwidth part,
wherein the retuning is based at least in part on identifying the portion of the time resources available for the UE to perform the retuning that occurs after tuning the radio frequency component to the first bandwidth of the channel; and
communicate with the network device using the first-active bandwidth part based at least in part on retuning the radio frequency component of the UE.
